(19)

**Europäisches Patentamt**
**European Patent Office**
**Office européen des brevets**

(11) **EP 4 459 705 A1**

(12) **EUROPEAN PATENT APPLICATION**
published in accordance with Art. 153(4) EPC

(43) Date of publication:
**06.11.2024 Bulletin 2024/45**

(21) Application number: **22916733.3**

(22) Date of filing: **28.12.2022**

(51) International Patent Classification (IPC):
**H01M 4/139** (2010.01)       **H01M 4/04** (2006.01)
**H01M 4/36** (2006.01)       **H01M 4/38** (2006.01)
**H01M 4/62** (2006.01)       **H01M 10/052** (2010.01)
**H01M 4/02** (2006.01)

(52) Cooperative Patent Classification (CPC):
**H01M 4/02; H01M 4/04; H01M 4/139; H01M 4/36;**
**H01M 4/38; H01M 4/62; H01M 10/052;** Y02E 60/10

(86) International application number:
**PCT/KR2022/021477**

(87) International publication number:
**WO 2023/128592 (06.07.2023 Gazette 2023/27)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **30.12.2021   KR 20210191965**
              **21.02.2022   KR 20220021873**

(71) Applicant: **IUCF-HYU (INDUSTRY-UNIVERSITY**
**COOPERATION**
**FOUNDATION HANYANG UNIVERSITY)**
**Seoul 04763 (KR)**

(72) Inventors:
 • **SUN, Yang-Kook**
  **Seoul 06288 (KR)**
 • **KIM, Hun**
  **Seoul 04763 (KR)**

(74) Representative: **dompatent von Kreisler Selting**
**Werner -**
**Partnerschaft von Patent- und Rechtsanwälten**
**mbB**
**Deichmannhaus am Dom**
**Bahnhofsvorplatz 1**
**50667 Köln (DE)**

(54) **POSITIVE ELECTRODE FOR LITHIUM-SULFUR BATTERY, METHOD FOR MANUFACTURING SAME, AND LITHIUM-SULFUR BATTERY INCLUDING SAME**

(57)    This invention pertains to a positive electrode for lithium-sulfur batteries, comprising a positive electrode active material and a binder. The positive electrode active material includes a sulfur-containing material, graphene, and carbon nanotubes (CNT). The carbon nanotubes are first mixed with the graphene to create a network structure, after which the sulfur-containing material is added so that it is embedded within the network structure. This arrangement facilitates the integration of the sulfur-containing material into the network, thereby forming a positive electrode for lithium-sulfur batteries.

**EP 4 459 705 A1**

FIGURE 1.

**Description**

CROSS-REFERENCE TO RELATED APPLICATIONS

This application claims priority to and the benefit of Korean Patent Application No. 10-2021-0191965 and 10-2022-0021873 filed in the Korean Intellectual Property Office on December 30, 2021 and February 21, 2022 respectively, the entire contents of which are incorporated herein by reference.

TECHNICAL FIELD

This invention relates to a positive electrode for lithium-sulfur batteries, a method for manufacturing the same, and a lithium-sulfur battery including the same. More specifically, by applying lithium-sulfur batteries through a novel method, this invention is concerned with enhancing process efficiency and providing a positive electrode for lithium-sulfur batteries with improved electrochemical performance and cycle characteristics, as well as a method for manufacturing the same, and a lithium-sulfur battery including the same.

BACKGROUND

With the advancement of portable mobile electronic devices such as smartphones, MP3 players, and tablet PCs, the demand for secondary batteries capable of storing electrical energy has surged dramatically. This increase in demand is particularly notable with the emergence of electric vehicles, large-scale energy storage systems, and portable devices that require high energy density.
Lithium secondary batteries, which can be charged using an external power source, possess many advantages including high energy density and long lifespan. As the application range of lithium secondary batteries expands to include not only portable electronic and communication devices but also electric vehicles and energy storage devices, the demand for higher capacity and more affordable lithium secondary batteries is growing.
Lithium-sulfur (Li-S) batteries utilize sulfur-based materials with S-S bonds as the positive active material and lithium metal as the negative active material. Sulfur is non-toxic, abundantly available, and cheap, which makes it possible to reduce production costs. Moreover, lithium-sulfur batteries have a theoretical discharge capacity of 1675 mAh/g and a theoretical energy density of 2600 Wh/kg, which is significantly higher than that of other secondary battery systems, thus attracting considerable attention for their high energy density.
However, despite their low cost and high energy density, lithium-sulfur batteries have yet to achieve stable implementation of their negative, positive, and electrolyte systems, and they suffer from side reactions that result in electrochemical performance lower than their theoretical energy density.
In response, various research efforts are underway to improve the structure and materials of lithium-sulfur batteries and to prevent side reactions in order to enhance their electrochemical performance and lifespan.
Prior Art Patent: Korean Registered Patent 10-0467456 (January 12, 2005)

SUMMARY OF THE INVENTION

The technical challenge this application aims to address is the provision of a positive electrode for lithium-sulfur batteries, a method for manufacturing the same, and a lithium-sulfur battery incorporating the same, all of which are made with a novel structure. Another technical challenge this application seeks to solve is to uniformly mix the positive electrode active material and binder, and by enhancing the ion conductivity, to provide a positive electrode for lithium-sulfur batteries and a method for manufacturing the same, as well as a lithium-sulfur battery that demonstrates excellent electrochemical and cycle characteristics. The technical challenges addressed by this application are not limited to those mentioned above.
In one embodiment of the present invention, a positive electrode for a lithium-sulfur battery comprises an active material and a binder, wherein the active material comprises sulfur-containing material, graphene, and carbon nanotubes (CNTs). The carbon nanotubes are first mixed with the graphene to form a network structure, and then the sulfur-containing material is added to ensure its integration within the network structure. The electrode further comprises a pellet with a density ranging from $0.7 \times 10^3$ kg/m^3 to $2.0 \times 10^3$ kg/m^3.
In one embodiment, the compressive strength of the pellet may range from 50 MPa to 1000 MPa.
In one embodiment, the binder may be mixed with a solvent to form a binder solution, which is then mixed with the positive electrode active material. The concentration of the binder solution may range from 0.1 wt% to 2 wt%.
In one embodiment, the binder solution is dried after being mixed with the positive electrode active material to form a powder. The powder may then be compressed into pellets with a pressure ranging from 50 MPa to 1000 MPa.
In one embodiment, the solvent may have a boiling point ranging from 60°C to 80°C, and the binder may comprise one or more of the following: polyacrylic acid, polyvinylidene fluoride, polyethylene oxide, polyvinyl acetate, polyvinyl alcohol, polyvinyl pyrrolidone, alkylated polyethylene oxide, cross-linked polyethylene oxide, polyvinyl ether, polymethyl methacrylate, polyethyl acrylate, polytetrafluoroethylene, polyvinyl chloride, polyacrylonitrile, polyvinylpyridine, polystyrene, and carboxymethyl cellulose.

In one embodiment, the pellets may be formed by compressing the positive electrode active material and the binder at a temperature of 40°C to 80°C and a pressure of 50 MPa to 1000 MPa for 2 to 10 minutes.

In one embodiment, the sulfur-containing material may comprise Li2S, S8, sulfurized polymer, or a mixture thereof. The graphene may have a form of nano platelets with a thickness ranging from 1 nm to 100 nm and an area size ranging from 0.5 $\mu$m to 20 $\mu$m, and the carbon nanotube may comprise MWCNT with an average diameter ranging from 10 nm to 100 nm.

In one embodiment, based on a total weight of 100 parts by weight of the lithium-sulfur positive electrode, the binder may range from 3 parts by weight to 10 parts by weight, and the positive electrode active material (including, for example, carbon nanotubes, graphene, and sulfur-containing materials) may range from 90 parts by weight to 97 parts by weight.

According to another aspect of the invention, the invention includes a positive electrode as described above; a lithium negative electrode positioned opposite the positive electrode; and an electrolyte positioned between the positive electrode and the negative electrode.

In one embodiment, the electrolyte may comprise a diluent in the range of 2 vol% to 10 vol%, and the diluent may comprise one or more of 1,1,2,2-tetrafluoroethyl 2,2,3,3-tetrafluoropropyl ether (TTE), bis(2,2,2-trifluoroethyl) ether (BTFE), and 1,1,2,2-tetrafluoroethyl-2,2,2-trifluoroethyl ether (TFTFE).

According to another aspect of the invention, the invention includes a method for manufacturing a lithium-sulfur positive electrode, comprising the steps of: mixing a binder in a solvent to prepare a binder solution; adding positive electrode active material to the binder solution and stirring to prepare a slurry; drying the slurry to remove the solvent and produce a powder; and pelletizing the powder.

In one embodiment, the positive electrode active material may include sulfur-containing material, graphene, and carbon nanotubes (CNTs). The carbon nanotubes may initially be mixed with the graphene to form a network structure, and then the sulfur-containing material may be added to ensure its incorporation into the network structure.

In one embodiment, the sulfur-containing material may comprise Li2S, S8, sulfurized polymers, or a combination of two or more thereof.

In one embodiment, the solvent may have a boiling point ranging from 60°C to 80°C.

In one embodiment, the solvent may comprise ethanol or acetone.

In one embodiment, the binder may comprise one or more of polyacrylic acid, polyvinylidene fluoride, polyethylene oxide, polyvinyl acetate, polyvinyl alcohol, polyvinyl pyrrolidone, alkylated polyethylene oxide, crosslinked polyethylene oxide, polyvinyl ether, polymethyl methacrylate, polyethyl acrylate, polytetrafluoroethylene, polyvinyl chloride, polyacrylonitrile, polyvinylpyridine, polystyrene, and carboxymethyl cellulose.

In one embodiment, the step of manufacturing the powder may include maintaining the slurry in a vacuum chamber at a temperature ranging from 25°C to 40°C.

In one embodiment, the step of pelletizing may further include aging the powder at a temperature ranging from 40°C to 80°C for a duration of 0.5 to 3 hours before forming the powder into pellets.

In one embodiment, during the step of pelletizing, the process may be carried out at a pressure ranging from 50 MPa to 1000 MPa, a temperature ranging from 40°C to 80°C, and a duration ranging from 2 minutes to 10 minutes.

According to another aspect of the invention, the invention may include the aforementioned positive electrode for a lithium-sulfur battery.

According to this invention, by first dissolving the binder in a solvent and then adding the positive electrode active material, the binder and positive electrode active material can be uniformly mixed. This process allows for the enhancement of the electrochemical properties of the positive electrode for lithium-sulfur batteries, as well as the method for manufacturing the same and the lithium-sulfur battery including it. Furthermore, the invention enables the omission of the positive current collector, making it applicable to various battery forms and simplifying the process. This can effectively reduce the manufacturing steps for the positive electrode for lithium-sulfur batteries, as well as the method for manufacturing the same and the lithium-sulfur battery including it.

BRIEF DESCRIPTION OF THE DRAWINGS

Fig. 1 is a schematic drawing of the positive electrode active material according to another embodiment of the present invention.
Fig. 2 shows photographs of sulfur positive produced in (a) Comparative Example 1 and (b) Example 1.

Fig. 3 presents the SEM EDX cross-sectional results of sulfur positive made in (a) Comparative Example 1 and (b) Example 1, illustrating the distribution of the binder.

Fig. 4 shows the SEM EDX surface results of sulfur positive fabricated in (a) Comparative Example 1 and (b) Example 1, depicting the distribution of Sulfur (S), Carbon (C), and binder (O).

Fig. 5 is a graph illustrating the cycle characteristics of Comparative Example 1 and Example 1.

Fig. 6 displays the electrode morphology after cycle characteristic evaluation for (a) Comparative Example 1 and (b) Example 1.

Fig. 7 shows the SEM image and X-ray mapping image of the positive active material manufactured according to Example 4.

Fig. 8 presents the XRD pattern of Example 4.

Fig. 9 comprises images from Example 3 to Example 5.

Fig. 10 is a graph showing the first cycle profile from 1.9 V to 2.8 V for Examples 2 to 5.

Fig. 11 is a cyclic voltammetry (CV) graph within the voltage range of 1.9 V to 2.8 V for the first cycle and the tenth cycle of Example 4.

Fig. 12 is a graph schematizing the areal capacity and specific capacity at 0.1C for Examples 2 to 5.

Fig. 13 represents the results of the electrochemical characteristics and surface properties of Example 5.

Fig. 14 is a graph depicting the specific capacity from 0.1C to 2C for lithium-sulfur batteries in Examples 2 to 5.

Fig. 15 shows the results of the cycle characteristics evaluation for lithium-sulfur batteries in Examples 2 to 5.

Fig. 16 evaluates the effect of including a diluent in the electrolyte.

Fig. 17 assesses the electrochemical performance depending on the inclusion of a diluent using the positive of Example 5.

Fig. 18 presents the XPS spectrum and SEM images depending on the inclusion of a diluent using the positive of Example 5.

Fig. 19 evaluates the results using a pouch-type full cell with the positive of Example 4.

## DETAILED DESCRIPTION

Hereafter, a detailed description of preferred embodiments of the present invention will be provided with reference to the accompanying drawings. However, it should be understood that the technical concept of the present invention is not limited to the embodiments described herein and may be implemented in other forms. Rather, the embodiments presented here are provided to thoroughly and completely disclose the invention and convey the inventive concept to those skilled in the art.

In this specification, when one component is described as being "on" another component, it means that the one component may be directly formed on the other component, or a third component may be interposed between them. Additionally, in the drawings, the thicknesses of layers and regions are exaggerated for effective description of technical content.

Furthermore, terms such as "first," "second," "third," etc., used in various embodiments in this specification, are used for descriptive purposes to distinguish one component from another. Therefore, a component described as the "first" component in one embodiment may be referred to as the "second" component in another embodiment. Each embodiment described and illustrated herein also includes its complementary embodiment. Additionally, the term "and/or" as used in the specification means that one or both of the listed components are included, unless the context clearly dictates otherwise.

The singular forms "a," "an," and "the" include plural forms unless the context clearly dictates otherwise. Furthermore, terms such as "comprising" or "having" should be interpreted as specifying the presence of stated features, integers, steps, components, or combinations thereof, but not precluding the presence or addition of one or more other features, integers, steps, components, or combinations thereof.

Moreover, detailed descriptions of known functions or configurations related to the present invention may unnecessarily obscure the essence of the invention and will be omitted when it is deemed so.

In one aspect of the invention, the invention may include a method for manufacturing a lithium-sulfur positive electrode, comprising the steps of: mixing a binder in a solvent to prepare a binder solution; adding a positive electrode active material to the binder solution and stirring to prepare a slurry; drying the slurry to remove the solvent and form a powder; and pelletizing the powder.

The solvent may have a boiling point between 60°C and 80°C. Specifically, the solvent may include ethanol or acetone. If the boiling point of the solvent is below 60°C, it can be problematic to maintain viscosity during the preparation of the binder solution and also difficult to uniformly mix with the positive electrode active material. If it exceeds 80°C, there can be problems in subsequent processes to remove the solvent, such as vaporization of sulfur or high costs incurred in the solvent removal process.

The binder may include one or more of polyacrylic acid, polyvinylidene fluoride, polyethylene oxide, poly(vinyl acetate), polyvinyl alcohol, polyvinylpyrrolidone, alkylated polyethylene oxide, cross-linked polyethylene oxide, polyvinyl ether, poly(methyl methacrylate), poly(ethyl acrylate), polytetrafluoroethylene, polyvinyl chloride, polyacrylonitrile, polyvinylpyridine, polystyrene, and carboxymethyl cellulose.

In this embodiment, the method for manufacturing a lithium-sulfur positive electrode may involve pre-preparing a binder solution and pelletizing it to form a positive electrode. During the process of forming a positive electrode by pelletizing, the solvent included in the binder solution should be removed. At this time, the solvent should be composed of a material that dissolves the binder well without chemically affecting it, facilitates drying, and prevents the vaporization of sulfur. If the boiling point of the solvent is below 60°C, the viscosity of the solvent could make it difficult to uniformly mix with the binder, and if it exceeds 80°C, there could be problems such as vaporization of sulfur or high costs in the solvent removal process during subsequent processes.

The positive electrode active material may be provided solely with a sulfur-containing material, or may further include a carbon material along with the sulfur-containing material. The sulfur-containing material may include $Li_2S$, S8, sulfurized polymer, or a mixture of two or more of these.

The sulfur-containing material may be a metal sulfide, such as lithium sulfide ($Li_2S$). The sulfur-containing material may also include elemental sulfur, specifically octasulfur (S8) molecules, more specifically cyclo-octasulfur (cyclo-S8) molecules. Additionally, the sulfur-containing material may include a sulfurized polymer, for example, sulfur-polyacrylonitrile (SPAN), sulfur-polyaniline, sulfur-(1,3-diisopropenylbenzene polyvinylidene dichloride), sulfur-(polyvinylidene dichloride-co-acrylonitrile), among others.

In specific examples, the sulfur-containing material may be lithium sulfide ($Li_2S$), a mixture of elemental sulfur and lithium sulfide ($Li_2S$), or it may further include a mixture of elemental sulfur, sulfurized polymer, or both with lithium sulfide ($Li_2S$).

The sulfur-containing material can take the form of agglomerated particles of nanosized sulfur-containing material particles, which may be encapsulated by a carbon material. Specifically, the agglomerates of lithium sulfide ($Li_2S$) within the sulfur-containing material may have an average diameter in the micron size range, specifically, from a few $\mu$m to tens of $\mu$m, for example, from 1 $\mu$m to 99 $\mu$m, more specifically, from 1 $\mu$m to 50 $\mu$m, and even more specifically, from 1 $\mu$m to 20 $\mu$m.

The carbon material may be a conductive carbon material, such as graphene, carbon nanotubes (CNT), carbon black, and acetylene black, among others. Specifically, the carbon material may be graphene. The graphene could be reduced graphene oxide or graphene flakes obtained from graphite.

More specifically, the positive electrode active material may include a sulfur-containing material, graphene, and carbon nanotubes (CNT), where the carbon nanotubes are first mixed with the graphene to form a network structure. Subsequently, the sulfur-containing material is added so that it is embedded within the network structure. This arrangement ensures the sulfur-containing material is effectively incorporated into the network, facilitating optimal interaction between the components for enhanced performance of the lithium-sulfur battery.

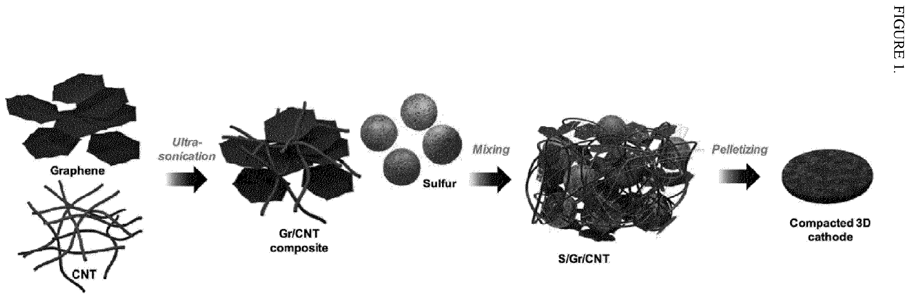

Fig. 1 schematically illustrates the positive electrode active material according to another embodiment of the invention. Referring to Fig. 1, graphene (Gr) and carbon nanotubes (CNT) are sonicated in N-methyl-2-pyrrolidone (NMP) to prepare a graphene/CNT composite. The graphene/CNT composite can be provided in a network form, specifically, the graphene can connect the spaces between the CNTs in a fiber form, establishing a network structure. A sulfur-containing compound can be mixed into the graphene/CNT composite. The sulfur-containing compound can be embedded within the interconnected graphene/CNT composite, ensuring it remains stable and does not leak out.

The graphene/CNT composite can enhance the conductivity of the sulfur-containing compound and also maintain a uniform dispersion of the sulfur-containing compound. This can improve the electrochemical and cycle characteristics of the secondary battery. Furthermore, the sulfur-containing compound can be incorporated into the positive electrode active material at a high loading rate by the graphene/CNT composite.

When considering the total weight of the positive electrode active material to be 100 parts by weight, the sulfur-containing material can be included in the range of 40 to 80 parts by weight, and the graphene/CNT composite can be included in the range of 20 to 60 parts by weight. If the sulfur-containing material is included at less than 40 parts by weight, it could result in a lower specific capacity of the lithium-sulfur battery, posing a problem. If it is included at more than 80 parts by weight, the conductivity of the electrode could significantly decrease due to the electrical insulating properties of sulfur, which could also pose a problem. Additionally, if the graphene/CNT composite is included at less than 20 parts by weight, it may not sufficiently fulfill its role in electrical conductivity and forming a uniformly distributed sulfur-containing network might be difficult. If it exceeds 60 parts by weight, the relative amount of the composite could be too high compared to the sulfur-containing material, leading to a decrease in the energy density of the lithium-sulfur battery, which would be problematic.

During the step of producing the powder, the slurry can be maintained in a vacuum chamber at a temperature of 25 °C to 40 °C to dry the solvent. By drying the slurry within the mentioned range, it is prepared in a state almost devoid of solvent.

During the pelletizing step, the process may further include aging the powder before forming it into pellets at a temperature between 40 °C to 80 °C for a duration of 0.5 to 3 hours. By conducting this aging process before pellet formation, the adhesion between the binder and the positive electrode active material can be enhanced. If the aging temperature is below 40 °C, the aging effect may be negligible, and temperatures above 80 °C could lead to issues such as vaporization of the sulfur-containing material. Specifically, the aging process can be carried out at 60 °C for 1 hour.

In the pelletizing step, the pressure can range from 50 MPa to 1000 MPa, the temperature from 40 °C to 80 °C, and the duration from 2 minutes to 10 minutes. During this step, the powder can be used in a state almost devoid of solvent. Specifically, by performing the pelletizing step within the mentioned parameters, it is possible to manufacture pellets without cracking and with a high sulfur loading level. Specifically, the pelletizing process can be conducted at a pressure of 700 MPa, a temperature of 60 °C for 5 minutes. Pellets manufactured in this manner can be made with a sulfur loading level of 15 mg/cm$^2$, enabling the production of electrodes that can achieve a capacity roughly three times greater than commercial lithium-ion batteries, regardless of the sulfur loading level.

Furthermore, during the pelletizing step, one or more methods such as the balling process, extrusion process, and compression process can be utilized.

According to another aspect of the invention, the invention includes the positive electrode for lithium-sulfur batteries as previously described. In another aspect of the invention, it encompasses a lithium-sulfur battery comprising: the aforementioned positive electrode; a lithium negative positioned opposite the positive electrode; and an electrolyte located between the positive electrode and the negative.

Furthermore, according to another aspect of this invention, an embodiment of the invention pertains to a positive electrode for lithium-sulfur batteries that includes a positive electrode active material and a binder. The positive electrode active material comprises a sulfur-containing material, graphene, and carbon nanotubes (CNT), where the carbon nanotubes are first mixed with the graphene to form a network structure. Subsequently, the sulfur-containing material is added so that it is embedded within this network structure. The density of the pellets formed can range from $0.7 \times 10^{-3}$ kg/m$^3$ to $2.0 \times 10^{-3}$ kg/m$^3$.

The positive electrode according to this example can be provided in the form of pellets, which consist of a network formed by carbon nanotubes and graphene, with the sulfur-containing material infiltrated within this network structure. Such lithium-sulfur battery positive electrodes formed into pellets can have a density ranging from $0.7 \times 10^{-3}$ kg/m$^3$ to $2.0 \times 10^{-3}$ kg/m$^3$. A density below $0.7 \times 10^{-3}$ kg/m$^3$ implies a high content of low-density carbon material within the electrode, leading to a relatively low sulfur content and consequently, a lower specific capacity, which is problematic. A density exceeding $2.0 \times 10^{-3}$ kg/m$^3$ may indicate difficulty in manufacturing the pellets due to the limit of compression density and can cause problems with the efficient transmission of ions within the electrode.

The compressive strength of the pellets ranges from 50 MPa to 1000 MPa, and the pellets can be provided in a state with no or almost no solvent. The compressive strength and solvent content of these pellets can influence the mechanical properties and electrochemical performance of the lithium-sulfur positive electrode.

Specifically, if the compressive strength of the pellets is below 50 MPa, there can be loss of the sample in the form of dust or fine particles during the electrode manufacturing process, and if it exceeds 1000 MPa, the impregnation of the electrolyte within and ion conductivity might be adversely affected. The compressive strength of the pellets can be measured using a uniaxial press (HS-162, Hyeksin Precision). Specifically, by positioning it at the center of the uniaxial press and applying a compression force of 30 kgf per minute to the pellet, the compressive strength (MPa) can be measured. By repeating this method three times, the average value of the compressive strength can be determined. Specifically, the compressive strength of the pellets can range from 500 MPa to 1000 MPa.

The binder is mixed with a solvent to form a binder solution, which is then mixed with the positive electrode active material. The concentration of the binder solution can range from 0.1 wt% to 2 wt%. A concentration below 0.1 wt% may pose difficulties in evaporating the solvent, while concentrations exceeding 2 wt% could lead to issues such as agglomeration of the positive electrode active material due to the binder. As an example, the viscosity of the binder solution can be approximately 1 mPa s (at 25 °C) to 2 mPa·s (at 25 °C).

After mixing the binder solution with the positive electrode active material and drying, the mixture is formed into a powder, which can be compressed under a pressure of 50 MPa to 1000 MPa to form pellets.

By maintaining the specified solvent content, the network structure of carbon nanotubes, graphene, and sulfur-containing material within the powder can be preserved during the process of forming pellets. This ensures that ions can move effectively within the pellets, enhancing the electrochemical properties of the lithium-sulfur battery.

Specifically, the sulfur-containing material may include $Li_2S$, S8, sulfurized polymer, or a mixture of two or more of these. The graphene can be in the form of nanoplatelets with a thickness of 1nm to 100nm and an area size of 0.5 $\mu$m to 20 $\mu$m. The carbon nanotubes can be multi-walled carbon nanotubes (MWCNT) with an average diameter of 10 nm to 100 nm.

Based on the total weight of the lithium-sulfur positive electrode being 100 parts by weight, the binder can be included in the range of 3 to 10 parts by weight, and the positive electrode active material (for example, carbon nanotubes, graphene, and sulfur-containing material) can constitute 90 to 97 parts by weight. Including the binder and the positive electrode active material within these ranges ensures that the binder uniformly secures the positive electrode active material, simultaneously enhancing the efficiency of ion conductivity of the positive electrode active material.

Another aspect of the invention pertains to a lithium-sulfur battery comprising the aforementioned positive electrode; a lithium negative positioned opposite the positive electrode; and an electrolyte located between the positive electrode and the negative. The electrolyte may include a diluent in the range of 2 vol% to 10 vol%. Examples of such diluents include 1,1,2,2-tetrafluoroethyl 2,2,3,3-tetrafluoropropyl ether (TTE), bis(2,2,2-trifluoroethyl) ether (BTFE), and 1,1,2,2-tetrafluoroethyl-2,2,2-trifluoroethyl ether (TFTFE). The inclusion of the diluent in the electrolyte at 2 vol% to 10 vol% is optimal; less than 2 vol% may not sufficiently manifest the effects of the diluent, whereas inclusion at 10 vol% may degrade the electrochemical characteristics of the lithium-sulfur battery. Additionally, the negative can include lithium metal, specifically, pre-treated lithium metal. The pre-treated lithium metal, treated with acids such as nitric acid on its surface, can prevent side reactions during the charge-discharge process due to the pre-treated surface.

The following details examples and comparative examples of the invention. However, it is to be understood that these examples are presented as preferred embodiments of the invention and that the scope of the invention is not limited to these examples.

## 1. Preparation of Positive Electrode Active Material

### (1) Method of Mixing Positive Electrode Active Material

### Comparative Example 1

To produce a graphene (Gr)/carbon nanotube (CNT) composite, graphene (95%, Graphene Supermarket) and multi-walled carbon nanotubes (MWCNT, 95%, Nanolab) were sonicated for 30 minutes each and dispersed in N-methyl-2-pyrrolidone (NMP, 99.50%, Daejung Chemicals & Metals). The dispersions were mixed in a 1:1 Gr/MWCNT ratio and further sonicated for an additional 30 minutes. The Gr/CNT composite was recovered through vacuum filtration using filter paper (No. 2, Advantec) and washed with ethanol to remove residual NMP. The Gr/CNT composite was dried overnight in a vacuum oven at 190 °C.

Polyacrylic acid (PAA) (average Mv: ~450,000, Sigma-Aldrich), Gr/CNT composite, and sulfur S (99.98% trace metals basis, Sigma-Aldrich) were mixed and then processed into a powder. The prepared powder was pelletized by maintaining it at 700 MPa and 60 °C for 5 minutes. The finished pellet-shaped electrode had a sulfur loading level of 5 mg/cm$^2$

### Example 1

To produce graphene/carbon nanotube (Gr/CNT) composites, graphene (Gr, 95%, Graphene Supermarket) and multi-walled carbon nanotubes (MWCNT, 95%, Nanolab) were each dispersed in N-methyl-2-pyrrolidone (NMP, 99.50%, Daejung Chemicals & Metals) through sonication for 30 minutes. The dispersions were then mixed in a 1:1 Gr/MWCNT ratio and further sonicated for an additional 30 minutes. The Gr/CNT composite was recovered through vacuum filtration using filter paper (No. 2, Advantec) and washed with ethanol to remove residual NMP. The Gr/CNT composite was then dried overnight in a vacuum oven at 190 °C.

A binder solution was prepared by adding poly (acrylic acid) (PAA) (average M_v: ~450,000, Sigma-Aldrich) as a binder into ethanol. To this binder solution, graphene/carbon nanotube (Gr/CNT) composite and sulfur (S, 99.98% trace metals basis, Sigma-Aldrich) were added and mixed. After the mixing was completed, the mixture was placed in a vacuum chamber, and the temperature was maintained at 30 °C to remove the solvent, resulting in the formation of a powder. The produced powder was then compressed at 700 MPa and maintained at 60 °C for 5 minutes to form pellets.

The completed pellet-shaped electrode had a sulfur loading level of 5 mg/cm$^2$.

### (2) Sulfur Loading Level

### Example 2 (Sulfur Loading Level: 3 mg/cm$^2$)

To produce graphene/carbon nanotube (Gr/CNT) composites, graphene (Gr, 95%, Graphene Supermarket) and multi-walled carbon nanotubes (MWCNT, 95%, Nanolab) were dispersed in N-methyl-2-pyrrolidone (NMP, 99.50%, Daejung Chemicals & Metals) by sonication for 30 minutes each. The dispersion was mixed in a 1: 1 Gr/MWCNT ratio and further sonicated for an additional 30 minutes. The Gr/CNT composite was recovered through vacuum filtration using filter paper (No. 2, Advantec) and was washed with ethanol to remove residual NMP. The Gr/CNT composite, with a weight ratio of Gr to CNT equal to 1: 1, was dried overnight in a vacuum oven at 190 °C.

In 3.95 g of ethanol, 0.005 g of poly(acrylic acid) (PAA) (average M_v: ~450,000, Sigma-Aldrich) was added to prepare a binder solution. To this prepared binder solution of 3.955 g, 0.04 g of graphene/carbon nanotube (Gr/CNT) composite and 0.055 g of sulfur (S, 99.98% trace metals basis, Sigma-Aldrich) were added and mixed. After the mixing was completed, the mixture was placed in a vacuum chamber, and the temperature was maintained at 30 °C to remove the solvent, forming a powder. The produced powder of $4.284 \times 10^{-3}$ g was transferred to a 10 mm diameter pellet mold and compressed at 700 MPa and maintained at 60 °C for 5 minutes to form pellets. The completed pellet-shaped electrode had a sulfur loading level of 3 mg/cm$^2$.

**Example 3 (Sulfur Loading Level: 5 mg/cm$^2$)**

A pellet-shaped electrode with a sulfur loading level of 5 mg/cm$^2$ was manufactured using the same method as in Example 2, except that $7.14 \times 10^{-3}$ g of the prepared powder was transferred into a 10 mm diameter pellet mold.

**Example 4 (Sulfur Loading Level: 10 mg/cm$^2$)**

A pellet-shaped electrode with a sulfur loading level of 10 mg/cm$^2$ was manufactured using the same method as in Example 2, except that $14.28 \times 10^{-3}$ g of the prepared powder was transferred into a 10 mm diameter pellet mold.

**Example 5 (Sulfur Loading Level: 15 mg/cm$^2$)**

A pellet-shaped electrode with a sulfur loading level of 15 mg/cm$^2$ was manufactured using the same method as in Example 2, except that $21.38 \times 10^{-3}$ g of the prepared powder was transferred into a 10 mm diameter pellet mold.

**2. Manufacturing of Secondary Batteries Using Positive Electrode Active Material**

For the manufactured positive electrodes, surface and SEM EDX evaluations were conducted, and their cycle characteristics were assessed using coin cells (circular electrode, Ψ10 mm).

Circular electrodes (Ψ10 mm) for coin-type cells or rectangular electrodes (44 mm $\times$ 62 mm) for pouch-type cells were fabricated.

Lithium metal foil (200μm, Hohsen Corp.) was used as the negative. It was cut into Li discs (Ψ16 mm) inside an argon-filled glove box and then pre-treated by soaking in a 3M LiNO3 (1-methoxy-2-(2-methoxyethoxy)ethane (DEGDME, 99.5%, Sigma-Aldrich)) solution for 3 hours. The pre-treated Li metal was washed with DME to remove residual Li salts and dried under vacuum. An electrolyte base (BE) consisting of 1M lithium bis(trifluoromethanesulfonyl)imide (LiTFSI; 99.95%, Sigma-Aldrich) and 0.2M LiNO3 (lithium nitrate (LiNO3; 99.999%, Alfa Aesar) in DME/DOL (DME/DOL = 1:1 by volume) was prepared. To introduce $Li_2S_6$ into the electrolyte, elemental sulfur and $Li_2S$ were dissolved in the electrolyte base at a 5:1 molar ratio by vigorously stirring at 65 °C for 24 hours.

All procedures were performed in an argon-filled glove box. PP/PE/PP was used as the separator. Constant current cycling tests were conducted at 30 °C using a battery test system (TOSCAT-3100, Toyo System Co., Iwaki, Japan).

Lithium bis(trifluoromethanesulfonyl)imide (LiTFSI; 99.95%, Sigma-Aldrich) and lithium nitrate (LiNO3; 99.999%, Alfa Aesar) were vacuum dried in a glass oven at 110°C for 3 days before use. DME (99.5%, Sigma-Aldrich), DOL (99.8%, Sigma-Aldrich), tetrafluoroethyl tetrafluoropropyl ether (TTE; 95.0%, TCI), and 1-methoxy-2-(2-methoxyethoxy)ethane (DEGDME, 99.5%, Sigma-Aldrich) were purified using a molecular sieve (4Å, Sigma-Aldrich) until the solvent content was less than 10ppm, as measured with a Karl Fischer titrator (C20, Mettler Toledo). The polypropylene separator (Celgard 2400, Celgard) was vacuum dried in a glass oven at 60°C for 3 days before use.

Additionally, to investigate the effect of the presence of a diluent, 5 vol% of a highly fluorinated ether, 1,1,2,2-tetrafluoroethyl 2,2,3,3-tetrafluoropropyl ether (TTE; 95.0%, TCI), was added to the electrolyte base (BE). The evaluation to determine the effect of the diluent presence was conducted under identical conditions, except for the addition of the diluent.

**3. Characterization and Electrochemical Measurement Methods**

The surface morphology was evaluated using SEM (Verios G4UC, Thermo Fisher Scientific). High-resolution XRD patterns were characterized using a diffractometer (JEM 2100F, JEOL) equipped with a Cu Kα radiation source. XRD data were obtained over a 2θ range of 10-80° with a step size of 0.03°.

After cycling, the surfaces of the completed electrodes and the lithium metal negative were examined using XPS (K-α+, Thermo Fischer Scientific). Binding energy values were calibrated referencing the C1s peak at 284.6 eV. Li metal samples were washed with DME to remove residual salts and dried under vacuum before measurement. Samples prepared in an argon-filled glove box were directly transferred to the X-ray photoelectron spectrometer to prevent exposure to ambient air.

Electrochemical tests were conducted with CR 2032 coin cells using compressed 3D positive electrodes, lithium metal negative or pre-treated lithium metal negative, and a polypropylene separator. The sulfur (S) loading levels on the compressed 3D positive electrodes were 3, 5, 10, and 15 mg/cm², respectively. The ratio of electrolyte volume ($\mu$L) to active material (S) content (g) (E/S ratio) was set to 12:1, 9:1, or 7:1 (expressed as 12, 9, and 7 $\mu$L mg$^{-1}$, respectively).

Coin cell assembly was performed in a glove box filled with argon with water and oxygen content <0.1 ppm. Galvanostatic cycling tests were carried out at 30 °C using a battery test system (TOSCAT-3100, Toyo System Co., Iwaki, Japan). The first cycle of the coin cells was performed in a voltage range of 1.8 V to 2.8 V at 0.1C, followed by cycles in a voltage range of 1.8 V to 2.8 V for Li-S batteries with mid S loading levels (3 and 5 mg/cm²) and 1.9-2.6 V for batteries with high S loading levels (10 and 15 mg/cm²). In each cycling test's C-rate conditions, 1C was evaluated as 1675 mA g$^{-1}$. EIS measurements were performed at 30 °C using VMP3 (BioLogic Science Instruments) at an open-circuit voltage with an AC amplitude of $\pm$5 mV over a frequency range of 0.05 Hz to 100 kHz. The electrolyte conductivity was determined using the previously reported method, calculating from the EIS results with the formula:

$$\delta(\text{electrolyte conductivity, S/cm}) = K(\text{constant, cm}^{-1}) / R(\text{resistance, }\Omega)$$

$$K(\text{constant, cm}^{-1}) = \ell(\text{distance, cm}) / s(\text{surface area, cm}^2)$$

For assembling $Li_2S_6$ symmetric cells, the method of manufacturing compressed 3D electrodes without active material (S) was similar to that for electrodes with active material, except that S: Gr/CNT composite: PAA were mixed in a weight ratio of 0:9:1. $Li_2S_6$ symmetric cells were manufactured into 2032 coin cells using compressed 3D electrodes without active material for both positive and negative. Each cell was injected with 40 $\mu$L of electrolyte containing 1 M $Li_2S_6$ salt in either the electrolyte base (BE) or diluted-modified electrolyte base material. CV measurements were conducted at 30 °C using VMP3, at a scan rate of 5mV s$^{-1}$ over a voltage range of $\pm$1.0 V.

**4. Characterization and Electrochemical Evaluation of Positive Electrode Active Material and Secondary Batteries**

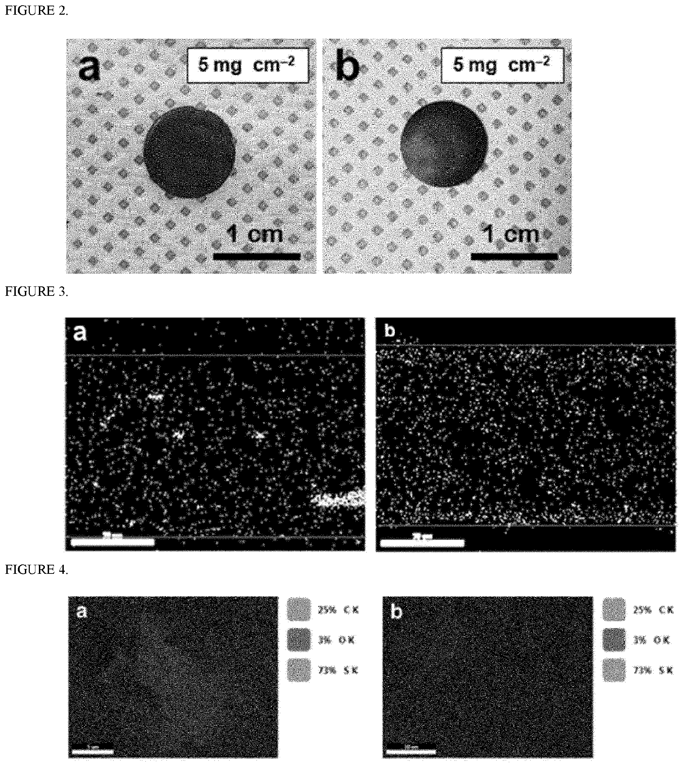

Fig. 2 displays photographs of sulfur positive electrodes fabricated in (a) Comparative Example 1 and (b) Example 1. Fig. 3 shows the SEM EDX cross-sectional results for sulfur positive electrodes made in (a) Comparative Example 1 and (b) Example 1, illustrating the distribution of the binder. Fig. 4 presents the SEM EDX surface results for sulfur positive electrodes produced in (a) Comparative Example 1 and (b) Example 1, indicating the distribution of Sulfur (S), Carbon (C), and binder (O) (aiming to demonstrate improvement in the distribution of S).

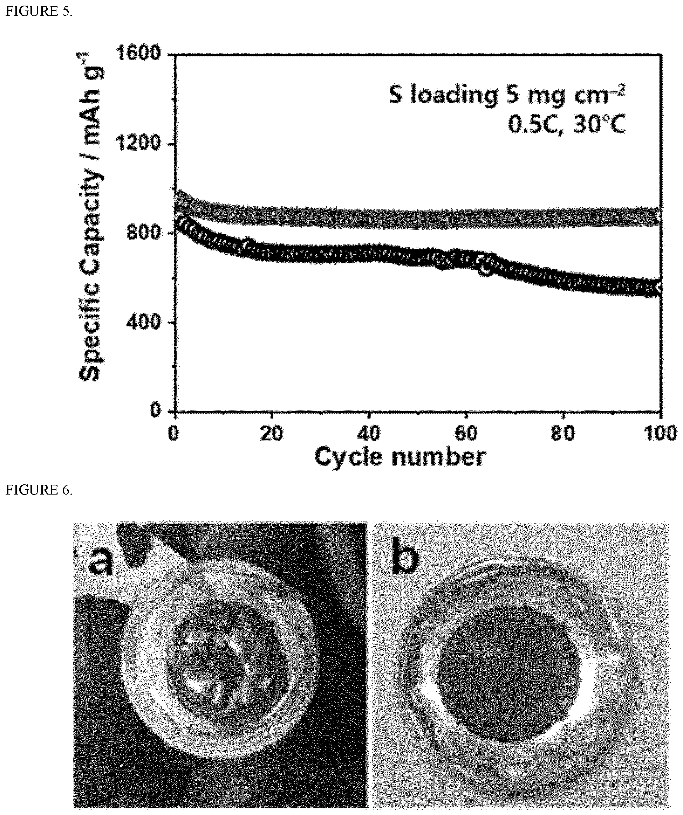

Referring to Figs. 2 and 3, it was observed that in Example 1, compared to Comparative Example 1, the binder was more uniformly distributed. Specifically, referring to Fig. 4, it can be seen that in Example 1, sulfur, carbon, and binder are all uniformly distributed, whereas in Comparative Example 1, sulfur appears to be clumped in certain areas. This indicates that by preparing a binder solution and then adding and mixing the positive electrode active material as per the example, the materials included in the positive electrode can be mixed more uniformly. Table 1 compares the characteristics of Comparative Example 1 and Example 1. Fig. 5 is a graph showing the cycle characteristics of Comparative Example 1 and Example 1. Fig. 6 displays the electrode morphology after cycle characteristic evaluation for (a) Comparative Example 1 and (b) Example 1.

[table 1]

| | Sulfur Loading Level | Density (kg/m³) | Compressive Strength (MPa) | Cycles | Capacity Retention (%) |
|---|---|---|---|---|---|
| **Comparative Example 1** | 5 mg/cm² | 1.4 * 10³ | 700 | 100 | 63.6 |
| **Example 1** | 5 mg/cm² | 1.4 * 10³ | 700 | 100 | 92.0 |

Referring to Fig. 5, it was observed that Example 1 exhibited superior cycle characteristics compared to Comparative Example 1. Additionally, after completing 100 cycles, the positive electrode of Comparative Example 1 did not retain its pellet shape and disintegrated, whereas Example 1 maintained the same pellet shape as initially after 100 cycles.

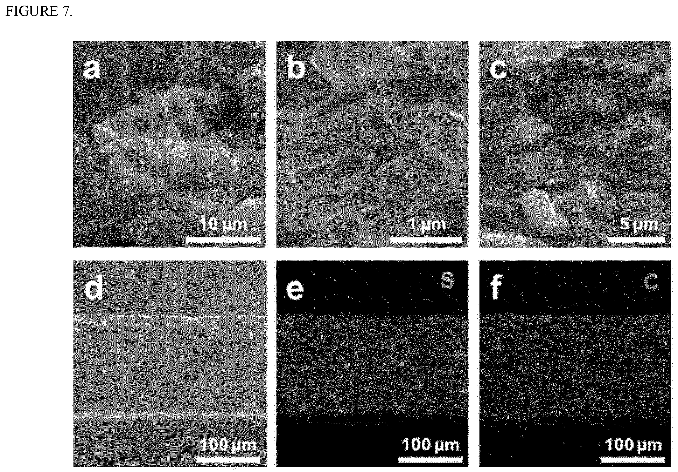

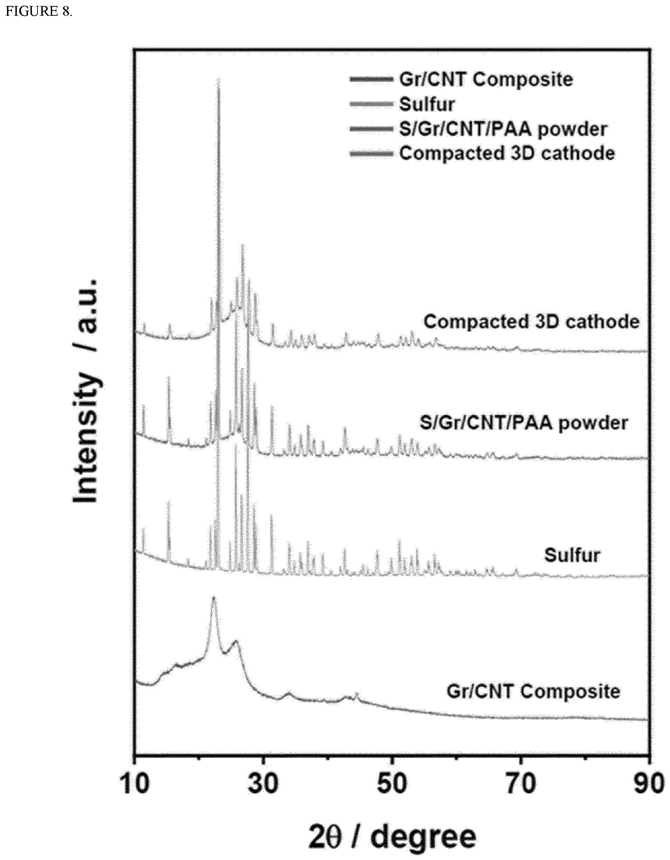

Fig. 7 presented the SEM images and X-ray mapping images of the positive electrode active material manufactured according to Example 4. Fig. 8 displayed the XRD patterns for Example 4. Specifically, Fig. 7 includes SEM images of the Gr/CNT composite (a, b), SEM images of the Gr/CNT/S/PAA powder before pellet formation (c), cross-sectional SEM images of the compressed 3D positive electrode from Example 4 (d), and X-ray (EDX) mapping images for S and C (e, f). Fig. 8 showed the XRD patterns of S, the Gr/CNT composite, Gr/CNT/S/PAA powder, and the compressed 3D positive electrode, respectively.

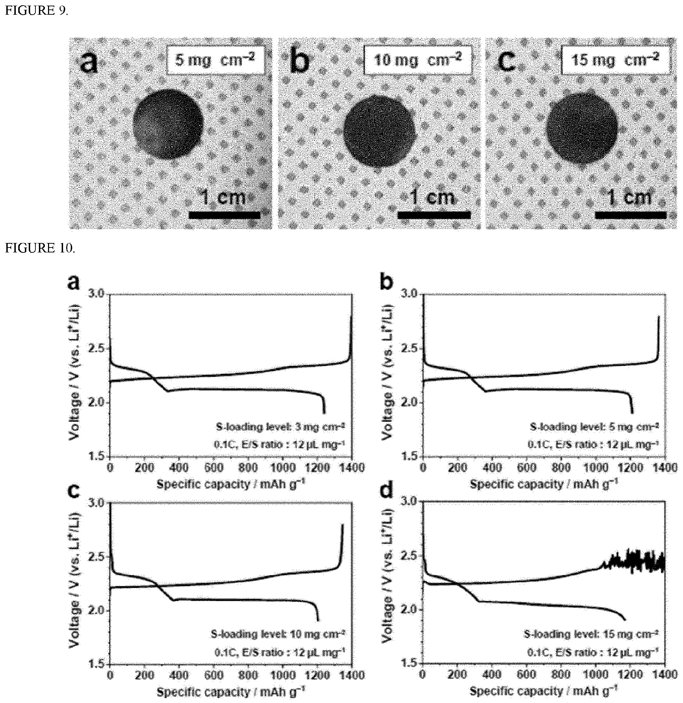

From Fig. 7, it could be observed that graphene (Gr) and carbon nanotubes (CNT) were sonicated in N-methyl-2-pyrrolidone (NMP) to prepare the Gr/CNT composite. The SEM images demonstrated that the CNTs were dispersed and interconnected with Gr, forming a 3D network structure of the Gr/CNT composite. Subsequently, PAA and acetone were mixed in a PAA solution, into which the Gr/CNT composite and S were added and mixed. The SEM image in Fig. 10 for C shows the Gr/CNT/S/PAA powder after solvent removal, where S is uniformly embedded within the interconnected network structure of the Gr/CNT composite. By compressing the Gr/CNT/S/PAA powder under high pressure into pellet form, and referencing the SEM images and X-ray (EDX) mapping results for S and C, it was confirmed that S and C were uniformly distributed within the compressed 3D positive electrode. Furthermore, these results were consistent with the XRD pattern results depicted in Fig. 8, indicating the effectiveness of the material synthesis and processing methods employed in Example 4 for creating a well-distributed electrode material structure, contributing to the improved electrochemical performance observed.

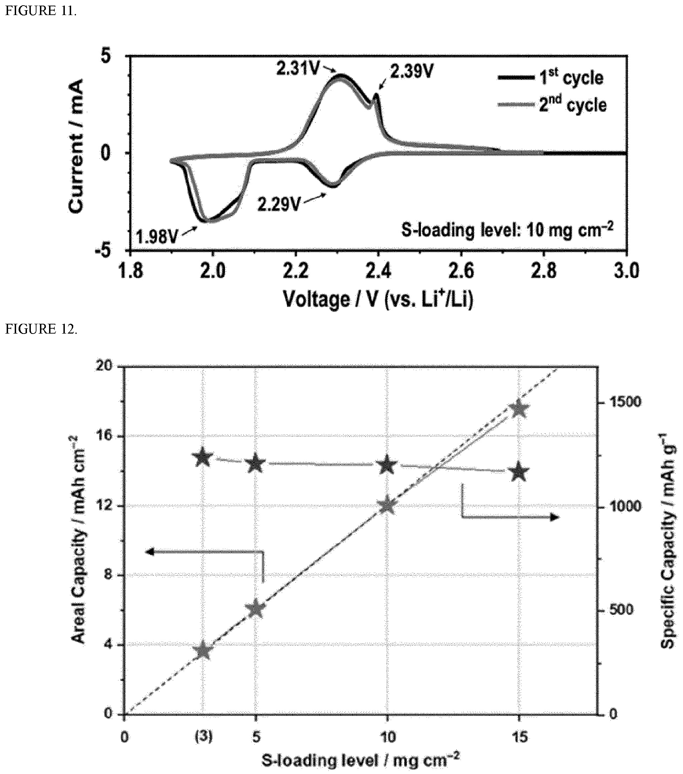

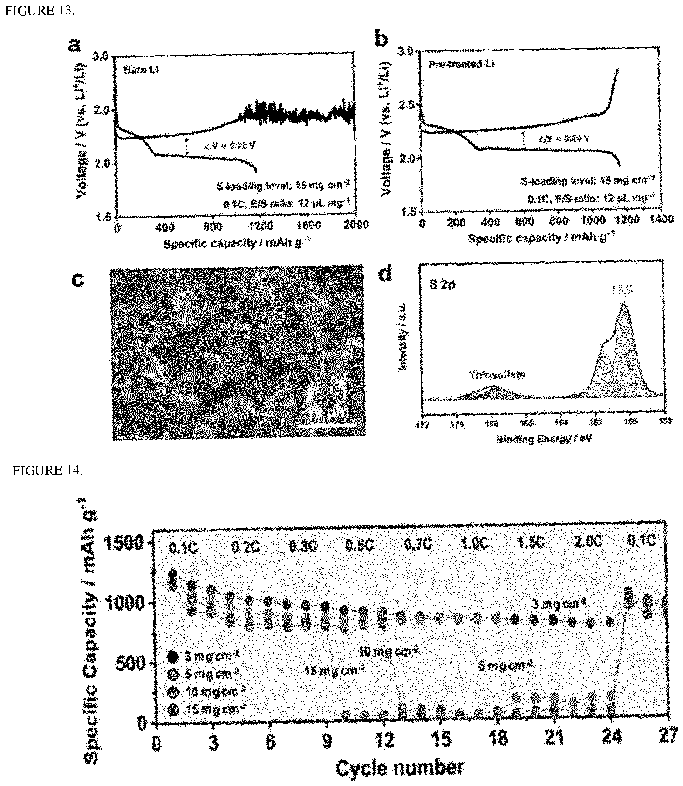

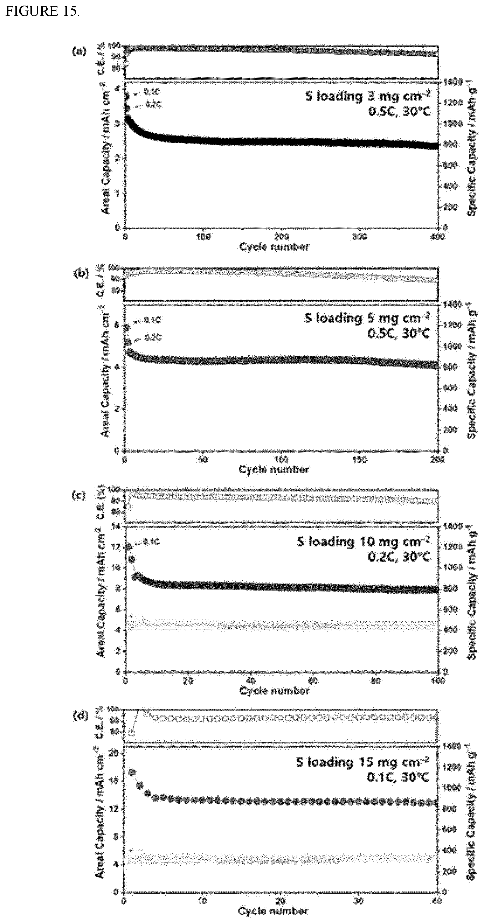

Table 2 presents a comparison of the characteristics from Examples 2 to 5. Fig. 9 depicts images from Examples 3 to 5. Fig. 10 illustrates the first cycle profiles at 1.9V to 2.8V for Examples 2 to 5. Fig. 11 displays the voltage-current (CV) curves for Example 4 at 1 cycle and 10 cycles within the voltage range of 1.9V to 2.8V. Fig. 12 schematically represents the areal capacity and cost for Examples 2 to 5. Fig. 13 shows the electrochemical and surface characteristics for Example 5. Fig. 14 demonstrates the capacity from 0.1C to 2C for lithium-sulfur batteries in Examples 2 to 5. Finally, Fig. 15 presents the cycle performance of lithium-sulfur batteries from Examples 2 to 5.

[table 2]

| | Sulfur Loading Level | Density (kg/m$^3$) | Compressive Strength (MPa) | Cycles | Capacity Retention (%) |
|---|---|---|---|---|---|
| Example 2 | 3 mg/cm$^2$ | 1.4 * 10$^3$ | 700 | 100 | 81.2 |
| Example 3 | 5 mg/cm$^2$ | 1.4 * 10$^3$ | 700 | 100 | 92.0 |
| Example 4 | 10mg/cm$^2$ | 1.4 * 10$^3$ | 700 | 100 | 86.5 |
| Example 5 | 15mg/cm$^2$ | 1.4 * 10$^3$ | 700 | 40 | 85.0 |

Referring to Fig. 9, it can be observed that even with different sulfur loading levels of 5 mg/cm$^2$ (Example 3), 10 mg/cm$^2$ (Example 4), and 15 mg/cm$^2$ (Example 5), there were no apparent differences in appearance after manufacturing into pellet form.

By referencing Fig. 10 and Fig. 11, the electrochemical performance of compressed 3D positive with various sulfur loading levels (3, 5, 10, and 15 mg/cm$^2$) was evaluated. The compressed 3D positive prepared according to the embodiments of the present invention exhibited a structure with high conductivity, allowing capacity to increase linearly with increasing sulfur loading levels without additional capacity loss. Even at a high loading level of 15 mg/cm$^2$, a high specific capacity of 1173 mAh/g and areal capacity of 17.6 mAh/cm$^2$ were achieved.

Fig. 11, depicting the cyclic voltage-current curve of Example 4 with a sulfur loading level of 10 mg/cm$^2$, illustrates the electrochemical reduction reactions involving the conversion between sulfur and lithium sulfide. The first reduction peak at 2.29 V during the positive scan of the 1st cycle indicates the transformation of elemental sulfur to long-chain lithium polysulfides (LiPSs, $Li_2S_n$, $4 \le n \le 8$), while the second reduction peak at 1.98 V suggests the conversion of long-chain LiPSs to short-chain LiPSs or lithium sulfide ($Li_2S_2$ or $Li_2S$). During the negative scan, two oxidation peaks at 2.31 V and 2.39 V signify the conversion of $Li_2S_2$ or $Li_2S$ back to long-chain LiPSs and the transformation of LiPSs to sulfur, respectively. The overlap of the reduction peaks in the 2nd cycle with those of the 1st cycle confirms reversibility.

Referring to Fig. 12 and Fig. 13, Example 5 with a very high sulfur loading level of 15 mg/cm$^2$ exhibits a high specific capacity but shows unnecessary overcharging phenomena in the initial cycle voltage profile (refer to Fig. 10). Fig. 13 presents the initial cycle voltage profiles using the positive of Example 5 with Li metal negative (a), pre-treated Li metal negative (b), SEM images of Example 5 (c), and XPS results of the Li metal negative in overcharged lithium-sulfur batteries using Example 5 (d).

In Example 5, during the continuous overcharging process, it was observed that the lithium metal negative developed a porous surface morphology (Fig. 13c), and as indicated by XPS, an insulating layer of $Li_2S/Li_2S_2$ was formed on the surface of the lithium metal negative. The abundant generation of lithium polysulfides (LiPSs) in positive with high sulfur loading levels, particularly above 15 mg/cm$^2$, led to severe shuttle phenomena. In particular, during the initial cycles, the pure lithium metal negative (with little to no solid electrolyte interface (SEI)) was exposed to the electrolyte and readily reacted with polysulfides. The pre-treated lithium metal negative, immersed in a lithium nitrate solution, aimed to prevent the direct exposure of a large amount of polysulfides to the surface of the lithium metal negative by forming stable inorganic compounds on the surface, thus inhibiting reactions with polysulfides at the interface. Comparing Fig. 13a and b, it can be seen that using a pre-treated lithium metal negative in positive with high sulfur loading levels can prevent overcharging phenomena during the initial cycles and reduce polarization by approximately 10%. Moreover, for sulfur loading levels exceeding 15 mg/cm$^2$, it was found to be more favorable to utilize pre-treated lithium metal negatives.

In Fig. 14, the positive materials obtained from Examples 2 to 5 with different sulfur loading levels were used to determine the specific capacities at various C-rates. Example 2 (sulfur loading level of 3 mg/cm$^2$) exhibited a capacity of 787 mAh/g at 2C-rate. Examples 3 (5 mg/cm$^2$), 4 (10 mg/cm$^2$), and 5 (15 mg/cm$^2$) showed capacities of 825 mAh/g, 802 mAh/g, and 790 mAh/g, respectively, at 1C-rate, 0.5C-rate, and 0.3C-rate.

Referring to Fig. 15, excellent cyclic characteristics were observed in Examples 2 to 5 regardless of the sulfur loading level. Even in Example 5 with a very high sulfur loading level of 15 mg/cm$^2$, it exhibited excellent characteristics during cycling without capacity loss. Particularly, it was noted that Example 5 with a sulfur loading level of 15 mg/cm$^2$ could generate a capacity of over three times that of commercial lithium-ion batteries.

In summary, according to the embodiments of the present invention for manufacturing lithium-sulfur positive, all materials included in the positive can be uniformly dispersed, and the pelletized state is maintained without alteration even after cycling. Therefore, it is possible to enhance the cyclic characteristics and significantly increase the capacity without limitations on the sulfur loading level.

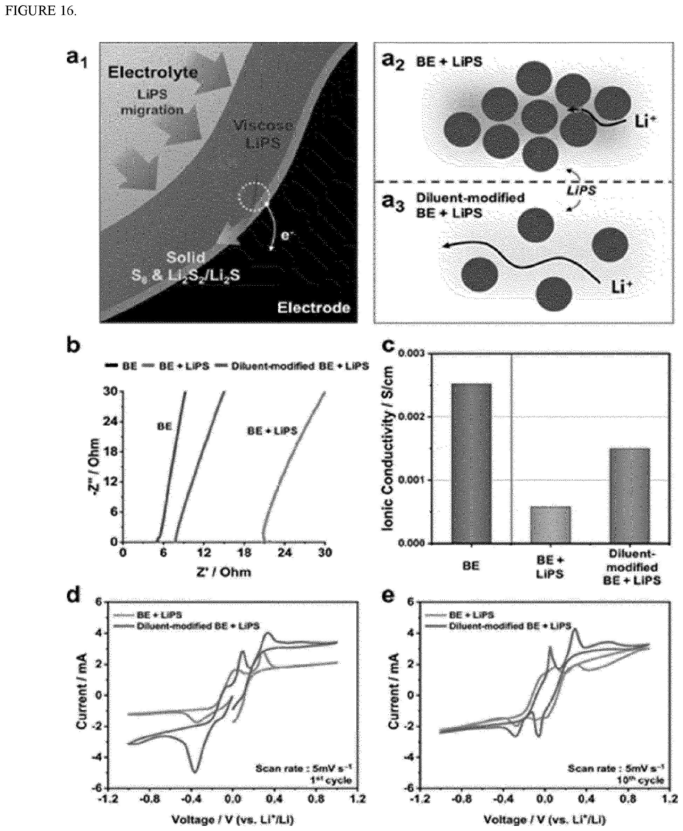

In Fig. 16, an evaluation was conducted to confirm the effect of the inclusion of a diluent in the electrolyte during charging and discharging processes. Referring to Fig. 16, during the charge-discharge process, sulfur (S) contained in the electrode reacts with the electrolyte to form lithium polysulfides (LiPSs) on the electrode surface (Fig. 16a1). The amount of LiPSs formed on the surface increases with higher sulfur loading levels. These formed LiPSs increase the viscosity of the electrolyte, thereby decreasing ion conductivity or hindering the conversion of sulfur compounds (Fig. 16a2). Additionally, when the conversion reactions occur slowly on the electrode surface, LiPSs can be locally concentrated, leading to an excessive formation of LiPSs at the electrode-electrolyte interface and an increase in electrolyte viscosity. To mitigate this, in the embodiments of the present invention, a diluent, 1,1,2,2-tetrafluoroethyl 2,2,3,3-tetrafluoropropyl ether (TTE), was added at a concentration of 5 vol% to the electrolyte base material (BE), which consists of 1M LiTFSI and 0.2M LiNO$_3$ in DME/DOL (DME/DOL = 1: 1 by volume), to investigate the effects of the diluent. The diluent aims to prevent stratification and can act as an inert material, despite the low solubility of lithium salts and LiPSs, when mixed with the electrolyte.

In Fig.s 16b and c, Electrochemical Impedance Spectroscopy (EIS) measurements were performed to determine the conductivity of the electrolyte base material (BE), material containing 1M LiPS ($Li_2S_6$) in the electrolyte base material (BE + LiPS), and material containing 1M LiPS ($Li_2S_6$) and diluent-modified electrolyte base material (diluent-modified BE + LiPS). The ion conductivity of the electrolyte base material (BE) was 2.5x10-3 S/cm, while that of the material containing 1M LiPS ($Li_2S_6$) (BE + LiPS) was 0.6x10-3 S/cm, and that of the material containing 1M LiPS ($Li_2S_6$) and diluent (diluent-modified BE + LiPS) was 1.5x10-3 S/cm. Thus, the inclusion of 1M LiPS ($Li_2S_6$) reduced ion conductivity, but the extent of reduction in ion conductivity was relatively less when more diluent was included. Specifically, compared to electrolytes containing 1M LiPS ($Li_2S_6$), those containing diluent showed approximately three times higher ion conductivity. The diluent acts as an inert solvent, preventing an increase in electrolyte viscosity caused by LiPSs and mitigating the decrease in electrolyte mobility.

Referencing Fig. 16 parts d and e, materials containing 1M LiPS ($Li_2S_6$) (BE + LiPS) and materials containing 1M LiPS ($Li_2S_6$) and a diluent (diluent-modified BE + LiPS) were used as electrolytes to perform charge-discharge tests and to verify the effectiveness of the S conversion reaction during the cycling process. Compressed 3D electrodes without active material (S) were used as the two electrodes. In the first cycle, it was observed that the symmetric cell including a diluent exhibited a higher current density compared to when no diluent was included. Moreover, during the 10-cycle process, the material containing 1M LiPS and a diluent (diluent-modified BE + LiPS) displayed distinct oxidation and reduction peaks, and the stepwise conversion reactions were clearly observable. In contrast, the material containing 1M LiPS (BE + LiPS) showed delayed conversion reactions, which is believed to be due to the presence of concentrated polysulfides between the electrolyte and electrode interface.

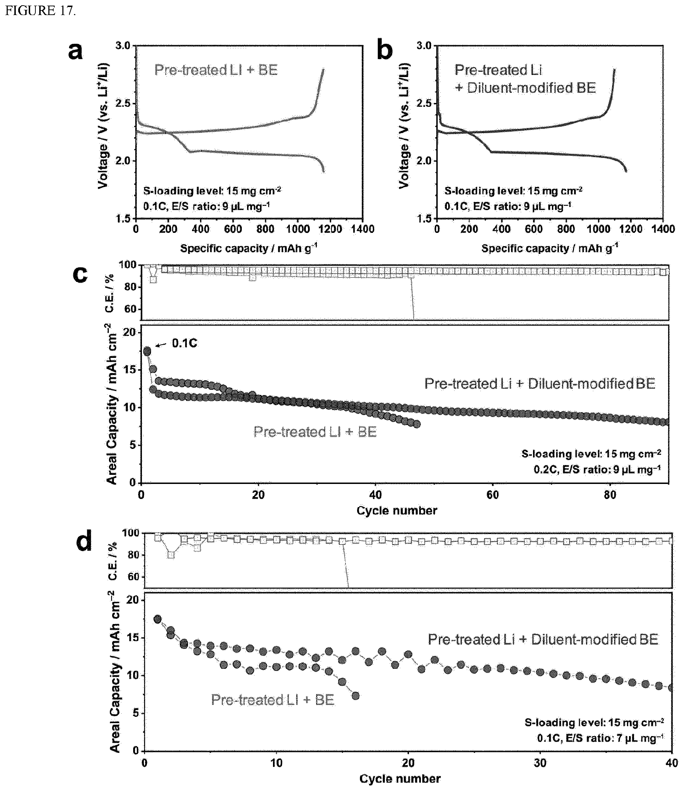

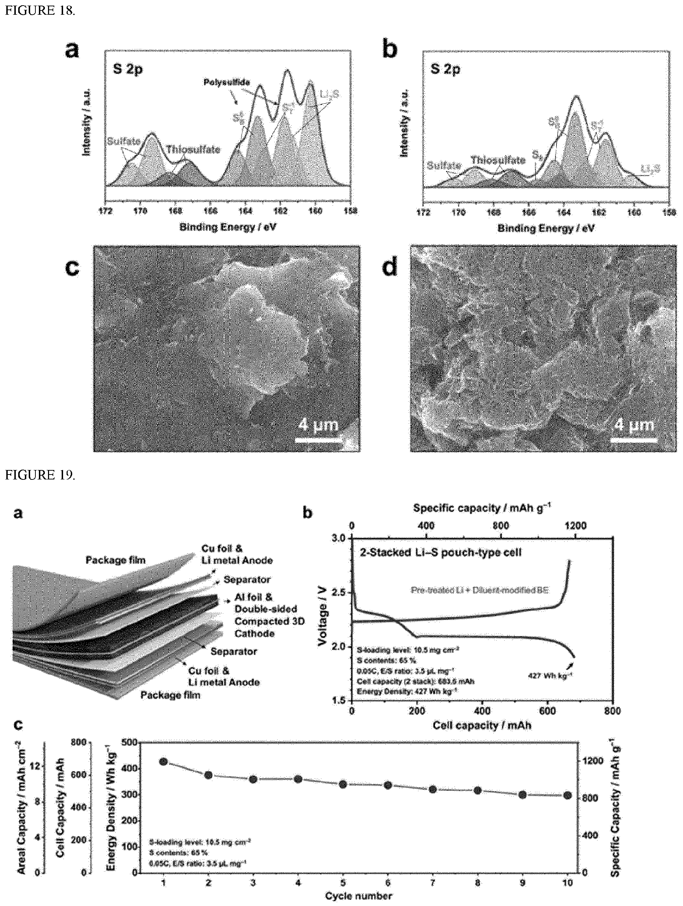

Fig. 17 presents the results of evaluating the electrochemical performance depending on the inclusion of a diluent using the cathode of Example 5. Fig. 18 shows the XPS spectra and SEM images depending on the inclusion of a diluent with the positive of Example 5.

In Fig. 17, using Example 5 (sulfur loading level: 15 mg/cm$^2$) as the positive, materials containing 1M LiPS (BE + LiPS) and materials containing 1M LiPS and a diluent (diluent-modified BE + LiPS) were used as electrolytes, respectively. An E/S ratio of 9 μl/mg was maintained in each electrolyte, and lithium-sulfur batteries were manufactured using pre-treated Li metal as the negative.

Both sides, using materials containing 1M LiPS (BE + LiPS) and materials containing 1M LiPS and a diluent (diluent-modified BE + LiPS), exhibited similar discharge capacities of approximately 1170 mA/g at 0.1C during the first cycle. Lithium-sulfur batteries utilizing materials containing 1M LiPS (BE + LiPS) demonstrated a gradual capacity decrease over 47 cycles, showing about 58% capacity retention after stabilization over 5 cycles and confirming deterioration. In contrast, lithium-sulfur batteries using materials containing 1M LiPS and a diluent (diluent-modified BE + LiPS) showed approximately 85% capacity retention after 5 cycles, indicating continuously stable cycle characteristics.

In Fig. 18, materials containing 1M LiPS (BE + LiPS) are shown on the left (a, c), and materials containing 1M LiPS and a diluent (diluent-modified BE + LiPS) are displayed on the right (b, d). In the lithium-sulfur batteries containing the material with 1M LiPS (BE + LiPS), the S 2p XPS spectrum of the charged positive electrode showed high peaks at 160.2 eV and 161.8 eV, attributed to $Li_2S$ and polysulfides, respectively, while the peak at 164.3 eV, attributed to S8, was almost absent. This indicates that the S conversion reaction was delayed, resulting in the accumulation of $Li_2S$ and polysulfides on the positive electrode. Additionally, the SEM image of the charged positive electrode in the lithium-sulfur batteries containing the material with 1M LiPS (BE + LiPS) also revealed the formation of a thick protective layer on the positive electrode surface.

Conversely, for the positive electrodes in lithium-sulfur batteries containing 1M LiPS and a diluent (diluent-modified BE + LiPS), the S 2p XPS spectrum showed lower peaks for $Li_2S$ and polysulfides, with a relatively higher peak for S8. Furthermore, SEM images showed the positive electrode surface to be relatively clean without a coating layer, suggesting that the inclusion of a diluent in the electrolyte increases ion conductivity and reduces the electrolyte's viscosity, allowing for a more uniform S conversion reaction throughout the positive electrode.

In terms of cycle performance, lithium-sulfur batteries including a diluent demonstrated stable charge-discharge characteristics for more than 40 cycles, whereas those without a diluent began to deteriorate rapidly after 17 cycles. This suggests that including a diluent in the electrolyte can prevent an increase in viscosity, thereby improving ion conductivity and reducing side reactions, ultimately enhancing the cycle performance of lithium-sulfur batteries.

Fig. 19 evaluates a pouch-type full cell using the positive electrode of Embodiment 4. In Fig. 19, a lithium-sulfur pouch cell (44mm × 62mm) with a two-layer structure was utilized, and the positive electrode was from Embodiment 4 (sulfur loading level: 10 mg/cm$^2$, containing 65 wt% sulfur), the electrolyte consisted of a base electrolyte (BE) of 1M LiTFSI and 0.2M LiNO$_3$ in DME/DOL (DME/DOL = 1:1 by volume) with 5 vol% of 1,1,2,2-tetrafluoroethyl 2,2,3,3-tetrafluoropropyl ether (TTE) (E/S ratio of 3.5 μl/mg) used, and the negative was pre-treated Li metal (x0.65 excess Li, thickness 100μm)(a). The initial charge-discharge cycle and cycle characteristics were performed at a current of 0.05C within a voltage range of 1.9V - 2.8V (b, c). Thus manufactured, the pouch-type full cell demonstrated a capacity of 683.6 mAh and an energy density of 427 Wh/kg, confirming a sulfur utilization rate similar to that of coin cells (approximately 1200 mAh/g).

In the pouch-type full cell using the positive electrode of Embodiment 4, polysulfides are generated due to the high S loading level. However, by manufacturing the positive electrode according to this embodiment, pre-treating the Li metal anode, and further including a diluent in the electrolyte, it was possible to promote the S conversion during the charge-discharge process, demonstrating a high capacity of 831 mAh/g over 10 cycles. Additionally, in this embodiment, the full cell was manufactured with a two-layer structure, and it is anticipated that a higher capacity could be achieved by increasing the number of layers.

In other words, when manufacturing a lithium-sulfur positive electrode according to the embodiments of the present invention, it is possible to uniformly disperse all materials included in the positive electrode and maintain the pelletized state unchanged even after performing cycles. Therefore, it is possible to improve the cycle characteristics and manufacture up to a high loading level without any limitation on the sulfur loading level, thereby significantly enhancing the capacity. Furthermore, even in the process of manufacturing a positive electrode with a high S loading level, it is possible to use S uniformly throughout the positive electrode and prevent side reactions, thereby efficiently manufacturing a lithium-sulfur battery with a high capacity.

Those skilled in the art to which the present invention pertains will understand that the invention can be implemented in various specific forms without departing from its technical concept or essential features. Therefore, the embodiments described above should be understood as exemplary in all aspects and not limiting. The scope of the invention is defined by the claims set forth below rather than the detailed description provided above, and any modifications or variations derived from the meaning and scope of the claims and the concept of equivalence are considered to be within the scope of the invention.

**Claims**

**1.** A positive electrode for lithium-sulfur batteries comprising a positive electrode active material and a binder,

wherein: the positive electrode active material includes a sulfur-containing material, graphene, and carbon nanotubes (CNT);

wherein the carbon nanotubes are first mixed with the graphene to form a network structure, then the sulfur-containing material is added so that the sulfur-containing material is embedded within the network structure;

wherein the density is in the form of pellets ranging from $0.7 \times 10^3$ kg/m$^3$ to $2.0 \times 10^3$ kg/m$^3$.

2. The positive electrode active material for lithium-sulfur batteries according to claim 1, wherein the compressive strength of said pellets is between 50 MPa and 1000 MPa.

3. The positive electrode for lithium-sulfur batteries according to claim 1, wherein the binder is mixed with a solvent to form a binder solution, which is then mixed with the positive electrode active material, and the concentration of the binder solution is between 0.1 wt% and 2 wt%.

4. The positive electrode for lithium-sulfur batteries according to claim 3, wherein the binder solution, after being mixed with the positive electrode active material, is dried to form a powder, and the powder is compressed under a pressure of 50 MPa to 1000 MPa to form pellets.

5. The positive electrode for lithium-sulfur batteries according to claim 3, wherein the solvent has a boiling point between 60 °C and 80 °C, and the binder includes one or more of polyacrylic acid, polyvinylidene fluoride, polyethylene oxide, poly(vinyl acetate), polyvinyl alcohol, polyvinylpyrrolidone, alkylated polyethylene oxide, cross-linked polyethylene oxide, polyvinyl ether, poly(methyl methacrylate), poly(ethyl acrylate), polytetrafluoroethylene, polyvinyl chloride, polyacrylonitrile, polyvinylpyridine, polystyrene, and carboxymethyl cellulose.

6. The positive electrode for lithium-sulfur batteries according to claim 1, wherein the pellets are formed by compressing the positive electrode active material and the binder at a temperature of 40 °C to 80 °C under a pressure of 50 MPa to 1000 MPa for 2 minutes to 10 minutes.

7. The positive electrode for lithium-sulfur batteries according to claim 1, wherein the sulfur-containing material includes Li2S, S8, sulfurized polymer, or a mixture of two or more thereof, the graphene includes nano-platelets with a thickness of 1nm to 100nm and an area size of 0.5 $\mu$m to 20 $\mu$m, and the carbon nanotubes are MWCNT with an average diameter of 10 nm to 100 nm.

8. The positive electrode for lithium-sulfur batteries according to claim 1, based on a total 100 weight parts of the lithium-sulfur positive electrode, wherein the binder is 3 to 10 weight parts, and the positive electrode active material is 90 to 97 weight parts.

9. The lithium-sulfur battery comprising a positive electrode according to any one of claims 1 to 8; a lithium negative positioned opposite the positive electrode; and an electrolyte positioned between the positive electrode and the negative, wherein the electrolyte includes a diluent in 2 vol% to 10 vol%, and the diluent includes one or more of 1,1,2,2-tetrafluoroethyl 2,2,3,3-tetrafluoropropyl ether (TTE), bis(2,2,2-trifluoroethyl) ether (BTFE), and 1,1,2,2-tetrafluoroethyl-2,2,2-trifluoroethyl ether (TFTFE).

10. The method for manufacturing a positive electrode for a lithium-sulfur battery, comprising the steps of: mixing a binder in a solvent to prepare a binder solution; adding a positive electrode active material to the binder solution and stirring to prepare a slurry; drying the slurry to remove the solvent and produce a powder; and pelletizing the powder.

11. A method for manufacturing a positive electrode for lithium-sulfur batteries according to claim 10, wherein the positive electrode active material comprises a sulfur-containing material, graphene, and carbon nanotubes (CNT), with the carbon nanotubes first mixed with the graphene to form a network structure, then the sulfur-containing material is added such that it is embedded within the network structure.

12. A method for manufacturing a positive electrode for lithium-sulfur batteries according to claim 11, wherein the sulfur-containing material includes Li2S, S8, sulfurized polymer, or a mixture of two or more thereof.

13. A method for manufacturing a positive electrode for lithium-sulfur batteries according to claim 10, wherein the solvent has a boiling point between 60 °C and 80 °C.

**14.** A method for manufacturing a positive electrode for lithium-sulfur batteries according to claim 13, wherein the solvent includes ethanol or acetone.

**15.** A method for manufacturing a positive electrode for lithium-sulfur batteries according to claim 10, wherein the binder includes one or more of polyacrylic acid, polyvinylidene fluoride, polyethylene oxide, poly(vinyl acetate), polyvinyl alcohol, polyvinylpyrrolidone, alkylated polyethylene oxide, cross-linked polyethylene oxide, polyvinyl ether, poly(methyl methacrylate), poly(ethyl acrylate), polytetrafluoroethylene, polyvinyl chloride, polyacrylonitrile, polyvinylpyridine, polystyrene, and carboxymethyl cellulose.

**16.** A method for manufacturing a positive electrode for lithium-sulfur batteries according to claim 10, wherein during the step of producing a powder, the slurry is maintained in a vacuum chamber at a temperature of 25 °C to 40 °C.

**17.** A method for manufacturing a positive electrode for lithium-sulfur batteries according to claim 10, wherein during the pelletizing step, the process further includes aging the powder at a temperature of 40 °C to 80 °C for 0.5 hours to 3 hours before forming it into pellets.

**18.** A method for manufacturing a positive electrode for lithium-sulfur batteries according to claim 10, wherein during the pelletizing step, the process is performed at a pressure of 50 MPa to 1000 MPa, a temperature of 40 °C to 80 °C, for a time of 2 minutes to 10 minutes.

**19.** A positive electrode for lithium-sulfur batteries according to any one of claims 10 to 18.

FIGURE 1.

FIGURE 2.

FIGURE 3.

FIGURE 4.

FIGURE 5.

FIGURE 6.

FIGURE 7.

FIGURE 8.

FIGURE 9.

FIGURE 10.

FIGURE 11.

FIGURE 12.

FIGURE 13.

FIGURE 14.

FIGURE 15.

FIGURE 16.

FIGURE 17.

FIGURE 18.

FIGURE 19.

<div align="center">**INTERNATIONAL SEARCH REPORT**</div>

| International application No. |
| --- |
| **PCT/KR2022/021477** |

**A.    CLASSIFICATION OF SUBJECT MATTER**

**H01M 4/139**(2010.01)i; **H01M 4/04**(2006.01)i; **H01M 4/36**(2006.01)i; **H01M 4/38**(2006.01)i; **H01M 4/62**(2006.01)i; **H01M 10/052**(2010.01)i; **H01M 4/02**(2006.01)i

According to International Patent Classification (IPC) or to both national classification and IPC

**B.    FIELDS SEARCHED**

Minimum documentation searched (classification system followed by classification symbols)

H01M 4/139(2010.01); H01M 10/052(2010.01); H01M 10/0525(2010.01); H01M 10/056(2010.01); H01M 10/48(2006.01); H01M 4/13(2010.01); H01M 4/133(2010.01); H01M 4/58(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 황(sulfur), 바인더(binder), 펠렛(pellet), 탄소나노튜브(carbon nano tube), 그래핀 (graphene), 희석제(diluent)

**C.    DOCUMENTS CONSIDERED TO BE RELEVANT**

| Category* | Citation of document, with indication, where appropriate, of the relevant passages | Relevant to claim No. |
| --- | --- | --- |
| Y | CN 109873120 A (DALIAN INSTITUTE OF CHEMICAL PHYSICS, CHINESE ACADEMY OF SCIENCES) 11 June 2019 (2019-06-11) See claim 1; paragraphs [0015]-[0018] and [0024]-[0025]; and figures 1 and 3. | 1-9,11-12 |
| A | | 10,13-19 |
| Y | KR 10-2017-0113420 A (LG CHEM, LTD.) 12 October 2017 (2017-10-12) See claims 1-3 and 8; and paragraphs [0070], [0072] and [0086]-[0089]. | 1-19 |
| Y | KR 10-2016-0011558 A (CNANO TECHNOLOGY LIMITED) 01 February 2016 (2016-02-01) See claims 1, 5 and 7; and paragraphs [0040] and [0158]-[0159]. | 3-5,7,10-19 |
| Y | KR 10-2020-0059316 A (BATTELLE MEMORIAL INSTITUTE) 28 May 2020 (2020-05-28) See claims 1, 14, 17 and 19; and paragraphs [0137] and [0199]-[0200]. | 9 |

☑ Further documents are listed in the continuation of Box C.      ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
| --- | --- |
| **04 May 2023** | **04 May 2023** |

| Name and mailing address of the ISA/KR | Authorized officer |
| --- | --- |
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2022/021477** |

### C. DOCUMENTS CONSIDERED TO BE RELEVANT

| Category* | Citation of document, with indication, where appropriate, of the relevant passages | Relevant to claim No. |
| --- | --- | --- |
| A | KR 10-2020-0132773 A (IUCF-HYU (INDUSTRY-UNIVERSITY COOPERATION FOUNDATION HANYANG UNIVERSITY)) 25 November 2020 (2020-11-25)<br>See entire document. | 1-19 |
| A | KR 10-2015-0122653 A (BAYER MATERIAL SCIENCE AG) 02 November 2015 (2015-11-02)<br>See entire document. | 1-19 |
| X | KIM, H. et al. Achieving High-Performance Li–S Batteries via Polysulfide Adjoining Interface Engineering. ACS Appl. Mater. Interfaces. 11 August 2021, vol. 13, pp. 39435-39445.<br><br>※This document is a document declaring exceptions to lack of novelty in an earlier application that serves as a basis for claiming priority of the present international application. | 1-9 |

Form PCT/ISA/210 (second sheet) (July 2022)

**INTERNATIONAL SEARCH REPORT**
Information on patent family members

International application No.

**PCT/KR2022/021477**

| Patent document cited in search report | | | Publication date (day/month/year) | Patent family member(s) | | | Publication date (day/month/year) |
|---|---|---|---|---|---|---|---|
| CN | 109873120 | A | 11 June 2019 | None | | | |
| KR | 10-2017-0113420 | A | 12 October 2017 | CN | 108886173 | A | 23 November 2018 |
| | | | | CN | 108886173 | B | 16 March 2021 |
| | | | | EP | 3306734 | A1 | 11 April 2018 |
| | | | | EP | 3306734 | B1 | 27 February 2019 |
| | | | | JP | 2018-527731 | A | 20 September 2018 |
| | | | | JP | 6596581 | B2 | 23 October 2019 |
| | | | | KR | 10-2005506 | B1 | 30 July 2019 |
| | | | | PL | 3306734 | T3 | 30 August 2019 |
| | | | | US | 10700340 | B2 | 30 June 2020 |
| | | | | US | 2018-0205069 | A1 | 19 July 2018 |
| | | | | WO | 2017-171446 | A1 | 05 October 2017 |
| KR | 10-2016-0011558 | A | 01 February 2016 | CN | 105280904 | A | 27 January 2016 |
| | | | | CN | 105280904 | B | 03 January 2020 |
| | | | | JP | 2016-025077 | A | 08 February 2016 |
| | | | | JP | 6857443 | B2 | 14 April 2021 |
| | | | | KR | 10-2305509 | B1 | 28 September 2021 |
| KR | 10-2020-0059316 | A | 28 May 2020 | CN | 111212887 | A | 29 May 2020 |
| | | | | EP | 3697869 | A1 | 26 August 2020 |
| | | | | JP | 2021-500704 | A | 07 January 2021 |
| | | | | WO | 2019-078965 | A1 | 25 April 2019 |
| KR | 10-2020-0132773 | A | 25 November 2020 | KR | 10-2459711 | B1 | 27 October 2022 |
| KR | 10-2015-0122653 | A | 02 November 2015 | CN | 105074966 | A | 18 November 2015 |
| | | | | EP | 2959524 | A1 | 30 December 2015 |
| | | | | JP | 2016-514080 | A | 19 May 2016 |
| | | | | US | 2016-0020466 | A1 | 21 January 2016 |
| | | | | WO | 2014-128190 | A1 | 28 August 2014 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020210191965
- KR 1020220021873

- KR 100467456